# EUROPEAN PATENT SPECIFICATION

(11) **EP 2 120 380 B1**
(45) Date of publication and mention of the grant of the patent: **11.01.2012**
(21) Application number: 08715138.7
(22) Date of filing: 04.03.2008
(51) Int. Cl.: H04J 14/00

(54) **A METHOD FOR MULTIPLEXING AND DE-MULTIPLEXING THE LOW BIT RATE SERVICE**
VERFAHREN ZUM MULTIPLEXEN UND DEMULTIPLEXEN VON NIEDERBITRATIGEN DIENST
PROCÉDÉ DE MULTIPLEXAGE ET DE DÉMULTIPLEXAGE DE SERVICE DE FAIBLE DÉBIT BINAIRE

(30) Priority: 06.04.2007 CN 200710090367
(43) Date of publication of application: 18.11.2009
(73) Proprietor: Huawei Technologies Co., Ltd., Shenzhen, Guangdong Province 518129 (CN)
(72) Inventor: ZHANG, Jianmei, Guangdong Province 518129 (CN); LIU, Yue, Guangdong Province 518129 (CN)
(74) Representative: Pfenning, Meinig & Partner GbR
(86) International application number: PCT/CN2008/070402
(87) International publication number: WO 2008/122218

(56) References cited:
- EP-A1- 1 657 839
- CN-A- 1 734 986
- CN-A- 1 741 429
- CN-A- 1 790 993
- CN-A- 101 051 879
- US-A1- 2003 048 813

## Description

### FIELD OF THE INVENTION

The present invention relates to optical communication, and more specifically, to a method and an apparatus for multiplexing and demultiplexing low bit rate services.

### BACKGROUND

Synchronous Optical Network (SONET)/Synchronous Digital Hierarchy (SSDN), as a mature transmission technology, may realize access, multiplexing, scheduling, management, and protection for various client services. Meanwhile, Time Division Multiplexing (TDM) technique and Wavelength Division Multiplexing (WDM) technique develop as the demand for bandwidth increases. In the existing network, especially metropolitan area network environment, since traditional voice services coexist with a large volume of data services, the issue of hybrid services transmission needs to be addressed.

Compared with SONET/SDH and WDM, Optical Transport Network (OTN) employs a service-independent processing approach and defines a standard encapsulation structure, mapping various client services. Therefore, the transport network is undergoing a transit to use OTN as its bearer layer and at the same time provides transport services for traditional voice services and new broadband data services.

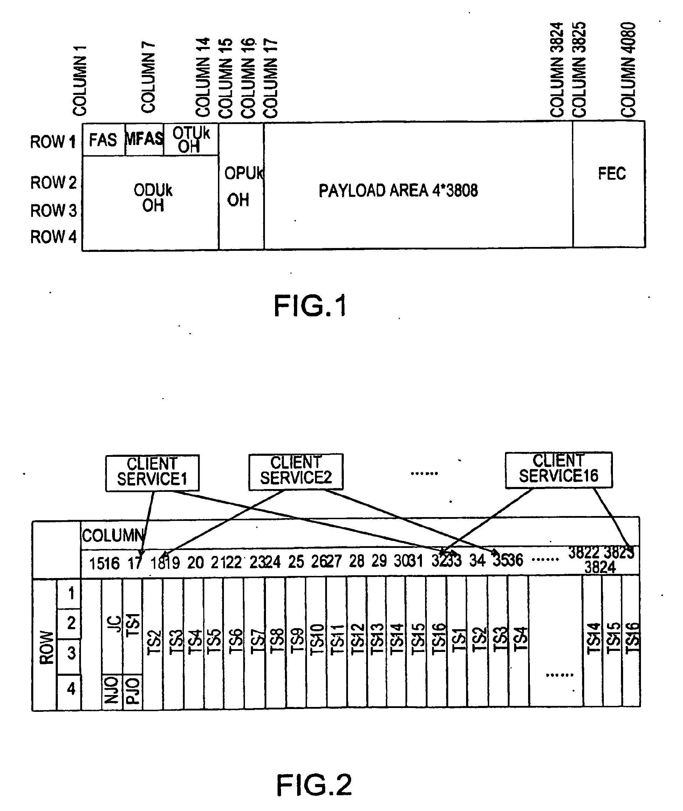

Referring to Figure 1, an OTN frame has a 4×4080 byte structure (i.e., 4 rows × 4080 columns bytes). The OTN frame structure contains a frame alignment area, Optical Channel Transport Unit-k Overhead area (OTUk OH, where k=1, 2, 3 corresponding to 2.5G, 10G, 40G level, respectively), Optical Channel Data Unit-k Overhead area (ODUk OH, where k=1, 2, 3 corresponding to 2.5G, 10G, 40G level, respectively), Optical Channel Payload Unit-k Overhead area (OPUk OH, where k=1, 2, 3 corresponding to 2.5G, 10G, 40G level, respectively), Payload area, Forward Error Correction (FEC) area, etc. The frame alignment area includes a Frame Alignment Sequence (FAS) and a Multi-frame Alignment Sequence (MFAS). The OPUk OH is primarily used to map client services and manage adaption. The ODUk OH information is primarily used to manage and monitor OTN frames. The OTUk OH information is primarily used to monitor transmission area.

The OTN standard defines two methods for mapping Constant Bit Rate (CBR), namely bit synchronous mapping method and asynchronous mapping method. The asynchronous mapping method is implemented by way of Negative and Positive Justification Control (i.e., there exist a tolerance for the difference between the transmission rate of client service and the transmission rate of OTN frame, and the negative and positive justification control is thereby employed to accommodate such difference), which is transparent to the client services.

OTN defines three types of frame signals with different bit rates: OPU1, ODU1 and OTU1 of 2.5G, OPU2, ODU2 and OTU2 of 10G, and OPU3, ODU3, and OTU3 of 40G. Unlike SONET/SDH, the size of each type of OTN frames is constant but the transmission rate is different.

Table 1 illustrates different types of OPUk and corresponding bit rates.

**Table 1**

| OPU type | OPU Payload nominal bit rate | OPU Payload bit rate tolerance |
|---|---|---|
| OPU1 | 2 488 320 kbit/s | ±20 ppm |
| OPU2 | 238/237 * 9 953 280 kbit/s | |
| OPU3 | 238/236 * 39 813 120 kbit/s | |
| OPU1 nominal bit rate is 2.48832 Gbps. OPU2 nominal bit rate is 9.995277 Gbps. OPU3 nominal bit rate is 40.150519 Gbps. | | |

Table 2 illustrates types of ODUk and corresponding bit rates.

**Table 2**

| ODU type | ODU Payload nominal bit rate | ODU Payload bit rate tolerance |
|---|---|---|
| ODU1 | 239/238 *2 488 320 kbit/s | ±20 ppm |
| ODU2 | 239/237 * 9 953 280 kbit/s | |
| ODU3 | 239/236 * 39 813 120 kbit/s | |
| ODU1 nominal bit rate is 2.498775 Gbps. ODU2 nominal bit rate is 10.037274 Gbps. ODU3 nominal bit rate is 40.319219 Gbps. | | |

Table 3 illustrates types of OTUK and corresponding bit rates.

**Table 3**

| OTU type | OUT Payload nominal bit rate | OTU Payload bit rate tolerance |
|---|---|---|
| OTU1 | 255/238 * 2 488 320 kbit/s | ±20 ppm |
| OTU2 | 255/237 * 9 953 280 kbit/s | |
| OTU3 | 255/236 * 39 813 120 kbit/s | |
| OTU1 nominal bit rate is 2.66057 Gbps. OTU2 nominal bit rate is 10.709225 Gbps. OTU3 nominal bit rate is 43018413. Gbps. | | |

Currently, a conventional method employs an interleave multiplexing technique to divide an OTN frame into a plurality of time slots (TS)-so as to realize the transmission of multiple synchronous services with low bit rate. The OTN employs byte-interleaved multiplexing technique to divide the Payload Area in the frame structure into a plurality of time slots, each having a constant bandwidth. Then, each client service is mapped to different time slots so as to realize the mapping and multiplexing of synchronous low bit rate services.

Referring to Figure 2, a conventional method divides the payload area of an OTUk frame into 16 time slots. Column 17 is TS1, column 18 is TS2, column 32 is TS16, and column 33 is TS 1 again.... Each time slot has a bandwidth of 155M. Each client service is allocated with one or more time slots so that each client service is mapped to corresponding time slot(s). The bit rate difference therebetween is adjusted by virtue of Justification Control (JC) and Justification Opportunity Overhead so as to realize the transmission of synchronous low bit rate services. In Figure 2, the position of Negative Justification Opportunity (NJO) byte, which is row 4, column 16, is constant, while the position of Positive Justification Opportunity (PJO) byte is not constant. The JC bytes (at row 1 to row 3, column 16) and the justification opportunity bytes in combination perform positive and negative justification on the services which have been allocated with corresponding time slots in the payload area.

Although the above mentioned techniques are able to map and multiplex the synchronous low bit rate services into OTN frames, the bearer of the low bit rate data service still remains a problem. For instance, the bearer of data services such as Gigabit Ethernet (GE), Fiber Channel (FC), Fiber Connectivity (FICON) and Enterprise Systems Connection (ESCON) may not be able to realize the multiplexing of arbitrary low bit rate services.

Other related prior art are as follows. Chinese patent application, publication No.CN 1741429A, relates to a method for transparently transporting a low bit rate signal in OTN. European patent application, publication No. 1657839A1, is directed to a method and apparatus for transporting a client layer signal over an optical transport network. US patent application, publication No. 2003/048813A1, introduces a method for mapping and multiplexing of constant bit rate signals into OTN frame.

### SUMMARY

Methods and apparatuses for multiplexing and demultiplexing low bit rate services are provided according to embodiments of the present invention. Accordingly, the OTN may carry data service, and may multiplex and demultiplex services at any low bit rate.

A method for multiplexing low bit rate services is provided according to an embodiment of the present invention. The method includes:
dividing an Optical Transport Network, OTN, frame into a plurality of time slots and allocating the plurality of time slots to the low bit rate services according to a bit rate of the low bit rate services;
determining the type of the low bit rate service, and asynchronously mapping a synchronous service to time slots allocated to the synchronous service if it is determined that the low bit rate service is a synchronous service; and
encapsulating the low bit rate service and mapping the low bit rate service to the time slots allocated to the low bit rate service if it is determined that the low bit rate service is not a synchronous service.

An apparatus for multiplexing low bit rate services is provided according to an embodiment of the present invention. The apparatus includes:
a time slot division and allocation module, configured to divide an Optical Transport Frame, OTN, frame into a plurality of time slots, and allocate the plurality of time slots to the low bit rate services according to the bit rate of low bit rate services; and
a mapping module, configured to determine the type of the low bit rate service, wherein if the low bit rate service is a synchronous service, the mapping module is further configured to asynchronously map the synchronous service to the time slots allocated to the synchronous service by the time slot division and allocation module; otherwise, the mapping module is further configured to encapsulate the low bit rate service and map the low bit rate service into the time slots allocated to the low bit rate service by the time slot division and allocation module.

A method for demultiplexing low bit rate services is provided according to an embodiment of the present invention. The method includes:
determining a mapping relation between each time slot in an Optical Transport Network, OTN, frame and a low bit rate service based on payload structure indications in the OTN frame and determine the type of the low bit rate service;
asynchronously demapping the time slots corresponding to the low bit rate service and recovering the synchronous service if the low bit rate service is a synchronous service;
demapping, if the low bit rate service is a data service, the time slots corresponding to the low bit rate service, recovering a standard encapsulating signal, extracting the data service from the standard encapsulating signal;
demapping, if the low bit rate service is an unknown service, the time slots corresponding to the low bit rate service, recovering a generic encapsulating signal, performing decapsulation and obtaining the unknown type service.

An apparatus for demultiplexing low bit rate services is provided according to an embodiment of the present invention. The apparatus includes:
an overhead resolving module, configured to determine a mapping relation between each time slot in an OTN frame and a low bit rate service based on payload structure indications in the OTN frame, and determine the type of the low bit rate service;
a synchronous service recovery module, configured to asynchronously demap the time slots corresponding to the low bit rate service and recover a synchronous service, when the overhead resolving module determines that the low bit rate service is a synchronous service;
a data service recovery module, configured to demap the time slots corresponding to the low bit rate service, recover a standard encapsulating signal and extract data service from the standard encapsulating signal, when the overhead resolving module determines that the low bit rate service is a data service; and
an unknown type service recovery module, configured to demap the time slots corresponding to the low bit rate service, recover a generic encapsulating signal, decapsulate the generic encapsulating signal and obtain a known type service, when the overhead resolving module determines that the low bit rate service is an unknown type service.

By time slots division and allocation as well as different mapping approaches for different types of service signals, embodiments of the present invention may allow OTN to carry data service and multiplex hybrid services The demultiplexing of the hybrid services may also be realized by analyzing PSI of the OTN frame and performing a corresponding demapping and decapsulation.

### BRIEF DESCRIPTION OF THE DRAWING

Figure 1 is a conventional OTN frame structure;
Figure 2 is a conventional illustration of dividing an OTN payload area into 16 time slots to realize multiplexing of synchronous low bit rate services;
Figure 3 is a flowchart of multiplexing low bit rate services according to a first embodiment of the present invention;
Figure 4 is an illustration of dividing an OTN frame into time slots according to an embodiment of the present invention;
Figure 5 is a block diagram of a generic encapsulation of an unknown low bit rate service signal according to an embodiment of the present invention;
Figure 6 is a flowchart of multiplexing low bit rate services according to a second embodiment of the present invention;
Figure 7 is an illustration of multiplexing various types of services into an OTN frame according to an embodiment of the present invention;
Figure 8 is a flowchart of demultiplexing low bit rate services according to a third embodiment of the present invention;
Figure 9 is a flowchart of multiplexing low bit rate services according to a fourth embodiment of the present invention; and
Figure 10 is a block diagram of an apparatus for demultiplexing low bit rate services according to a fifth embodiment of the present invention.

### DETAILED DESCRIPTION

Detailed description will be made to the present invention in conjunction with the accompanying drawings, while the invention is not intended to be limited to the below embodiments.

Low bit rate services includes synchronous services and data services, etc. Embodiments of the present invention divide an OTN frame into a plurality of time slots so that different types of low bit rate service signals may be mapped and multiplexed into corresponding time slots and output as an encapsulated OTN frame. Accordingly, the present invention not only addresses the bearing issue for the data services, but also realizes the multiplexing of synchronous services and data services.

### EMBODIMENT ONE

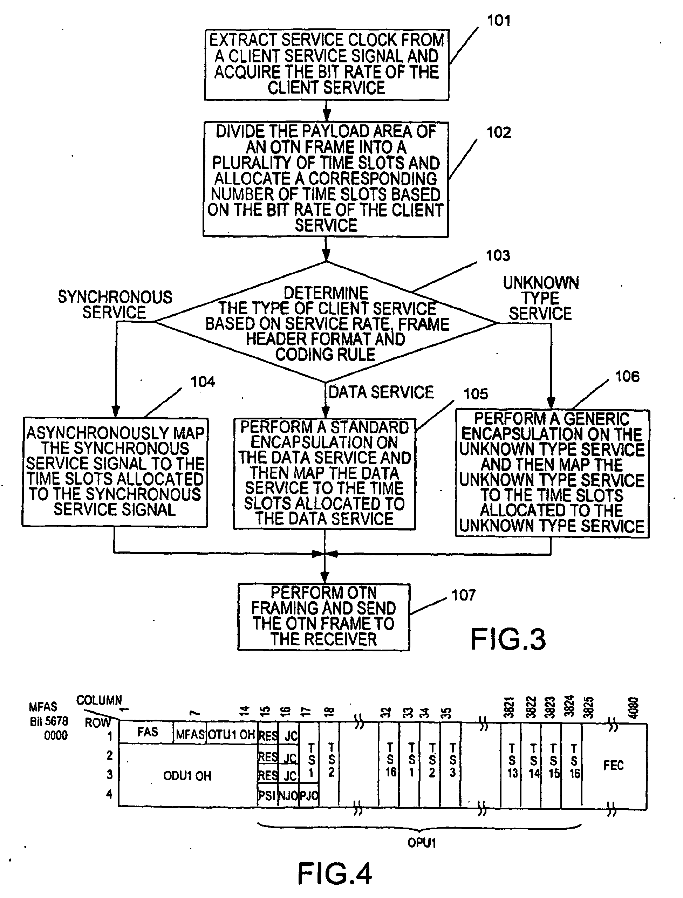

Referring to Figure 3, a method for multiplexing low bit rate services is provided according to an embodiment of the present invention where the type of low bit rate service is identified automatically. The method includes the following steps.

In step 101, clock data of an accessed client service are recovered and the client service signal rate is acquired.

In step 102, the payload area in the OTN frame is uniformly divided into a plurality of time slots. Each client service signal is allocated with a corresponding number of time slots based on each client service signal rate.

All the time slots have a same bandwidth. The bandwidth of each time slot is determined by dividing the OTN frame bandwidth by the number of time slots. There are a lot of methods to divide the OTN frame into time slots. For instance, the OTN frame can be divided by way of byte-interleaved multiplexing or sequential multiplexing, or may be divided arbitrarily. The present embodiment is described in byte-interleaved multiplexing mode.

In step 103, the type of the client service is determined based on the bit rate of the service, which is obtained from the clock data recovered.

The synchronous service generally supports various bit rate granularities: 155Mbps, 622Mbps, 2.5Gbps and 10Gbps, etc. The data service also supports various bit rate granularities: 125Mbps, 200Mbps, 266Mbps, 270Mbps, 533Mbps, 1.0625Gbps and 1.25Gbps, 2.125Gbps, etc. Therefore, whether the client service is a synchronous service or a data service can be determined based on the bit rate of the service.

The type of client service can be further determined by analyzing the frame header of the service signal as the frame header of the synchronous service signal has a fixed format (an F628 sequence with fixed length at a fixed position). Therefore, verification can be performed in accordance with a synchronous service frame alignment scheme, i.e., frame header characteristics of the synchronous service. If the verification passes, the service signal is determined to be a synchronous service. Then, the method proceeds to step 104.

If the bit rate of the service rate is a standard bit rate of a data service, a standard coding rule which is unique to the data service is utilized to verify the service signals. For instance, Fast Ethernet service of 125Mbps adopts 4B/5B coding scheme. Majority of the other data services such as GE, FC, ESCON and Digital Video Broadcast (DVB) all adopt 88/10B coding scheme. If the verification passes, the service signal is determined to be a data service. Then, the method proceeds to step 105.

If the client service neither passes the verification by synchronous service frame alignment scheme nor passes the verification by data service coding rule, the type of client service is determined to be an unknown type service. The method then proceeds to step 106.

In step 104, the synchronous service signal is asynchronously mapped to its allocated time slots. Since the frequency offset (±20 ppm) of the synchronous service signal is within the range of OTN asynchronous adjustment, positive and negative justification can be performed in the mapping process so that the bit rate of the synchronous service is adapted. Then, the method proceeds to step 107.

In the process of mapping the synchronous service signal asynchronously to its allocated the time slots, OPUk justification control and justification opportunity overhead can be used to perform positive and negative justification over the bit rate of the synchronous service. The specific position is specified by MFAS, as illustrated in Figure 4. The bit rate level for OTN frame is 2.5G, which is OTU1. The payload area in OTU1 frame shown in Figure 4 is divided into 16 time slots, with each having a bandwidth of 155Mbps. Four lower bits (i.e., 5^{th}, 6^{th}, 7^{th}, 8^{th} bit) in MFAS are used to designate the time slots for bit rate justification. If MFAS=0000 (binary), then PJO may justify at time slot 1 the bit rate of the service carried by time slot 1. If MFAS=0001 (binary), then PJO may justify at time slot 2 the bit rate of the service carried by time slot 2.

In step 105, standard encapsulation, such as High Level Data Link Control (HDLC), Generic Framing Procedure (GFP), may be performed on the data service signal. Bit rate adaption is completed by virtue of encapsulation. The data service signal is mapped to its allocated time slots. Then, step 107 is performed.

In step 106, the client service signal of unknown type is mapped to its allocated time slots after a generic encapsulation is performed on this client service signal. Then, the method proceeds to step 107.

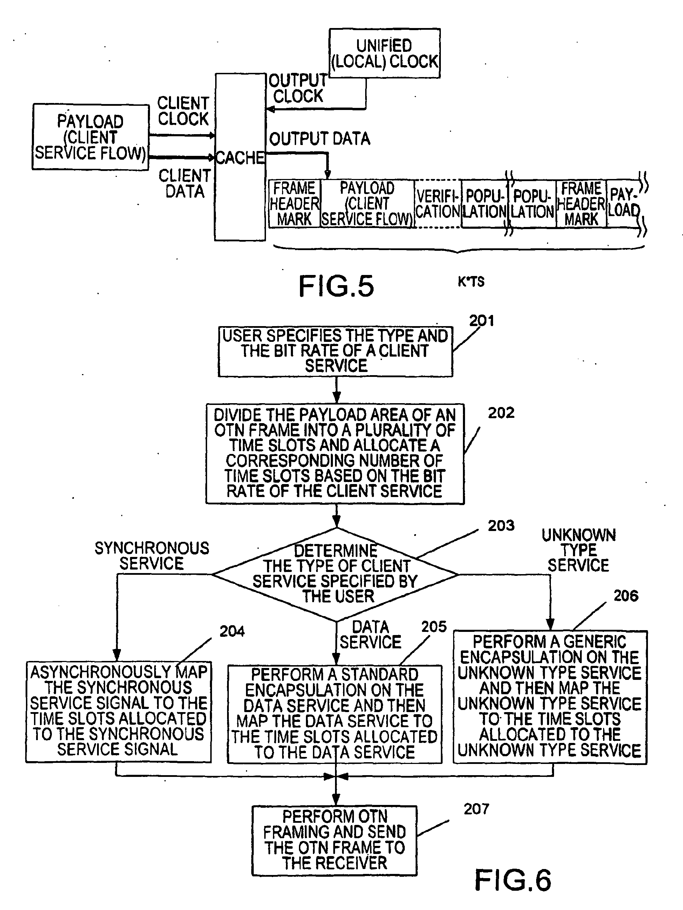

The generic encapsulation processing is described below. Referring to Figure 5, the client service information is written into a cache in accordance with service clock. To output the client data from the cache, client data with specified length is read out from the cache in a predetermined unified clock (The clock frequency is dependent on the bandwidth allocated to the client service. For instance, each time slot has a bandwidth of 155Mbps, and if the client service is allocated with 2 time slots, the clock frequency is 31 1MHz). Then, a frame header mark may be inserted at the front for use by a receiver to recover client data. Further, a verification bit may be inserted at the end of the read-out client data, ensuring the integrity of client service transmission. Further, since the client service clock and the unified clock of the outputting end are generally not consistent, data with fixed sequence may be populated in the read-out client data for bit rate adaption.

In step 107, OTN framing is performed and the OTN frame is sent to the receiver.

### EMBODIMENT TWO

Referring to Figure 6, a method for multiplexing low bit rate services is further provided according to an embodiment of the present invention where the user specifies the type of low bit rate service. The method includes the following steps.

In step 201, the user specifies the client service type and the service rate. The client service type includes synchronize service and data service, etc.

In step 202, the payload area in the OTN frame is uniformly divided into a plurality of time slots. Each client service signal is allocated with a corresponding number of time slots based on each client service signal rate. All the time slots have a same bandwidth. The bandwidth of each time slot is determined by dividing the bandwidth of OTN frame payload area by the number of time slots. There are a lot of methods to divide the OTN frame into time slots. For instance, the OTN frame can be divided by way of byte-interleaved multiplexing or sequential multiplexing, or may be divided arbitrarily. The present embodiment is described in byte-interleaved multiplexing mode.

In step 203, the type of client service is determined. If the service type specified by the user is synchronous service, the method proceeds to step 204. If the service type specified by the user is data service, the method proceeds to step 205. If the service type specified by the user is unknown, the method proceeds to step 206.

In step 204, the synchronous service signal is asynchronously mapped to its allocated time slots. Since the frequency offset (±20 ppm) of the synchronous service signal is within the OTN asynchronous adjustment range, positive and negative justification can be performed on the mapping process so that the bit rate of the synchronous service is adapted. Then, the method proceeds to step 207.

In the process of mapping the synchronous service signal asynchronously to its allocated time slots, OPUk justification control and justification opportunity overhead can be used to perform positive and negative justification over the synchronous service bit rate. The specific position is specified by MFAS, as illustrated in Figure 4. In Figure 4, the payload area in OTU frame is divided into 16 time slots, with each having a bandwidth of 155Mbps. Four lower bits (i.e., 5^{th}, 6^{th}, 7^{th}, 8^{th} bit) in MFAS are used to designate the time slots for bit rate justification. If MFAS=0000 (binary), then PJO may justify at time slot 1 the bit rate of the service carried by time slot 1. If MFAS=0001 (binary), then PJO may justify at time slot 2 the bit rate of the service carried by time slot 2.

In step 205, standard encapsulation, such as HDLC, GFP, may be performed on the data service signal. Bit rate adaption is completed by virtue of encapsulation. The data service signal is mapped to its allocated time slots. Then, step 207 is performed.

In step 206, the client service signal of unknown type is mapped to its allocated time slots after a generic encapsulation is performed on this client service signal. Then, the method proceeds to step 207.

The generic encapsulation process is described below. Referring to Figure 5, the client service information is written into a cache in accordance with a service clock. To output the client data from the cache, client data with specified length are read out from the cache in a predetermined unified clock. Then, a frame header mark may be inserted at the front for use by a receiver to recover client data. Further, a verification bit may be inserted at the end of the read-out client data, ensuring the integrity of client service transmission. In addition, since the client service clock and the unified clock of the outputting end are generally not consistent, data with fixed sequence may be populated in the read-out client data for bit rate adaption.

In step 207, OTN framing is performed and the OTN frame is sent to the receiver.

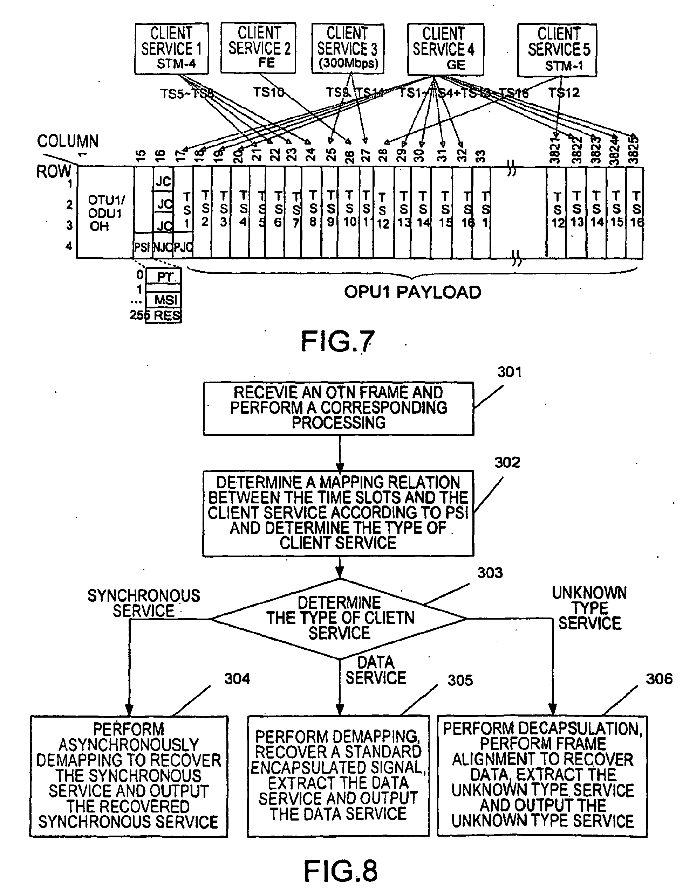

Referring to Figure 7, an application scenario is described below for illustration of multiplexing of hybrid low bit rate services. There are 5 client services in Figure 7. Client service 1 is a synchronous service in Synchronous Transport Mode (STM-4). Client service 2 is a data service FE. Client service 3 is an unknown service with 300Mbps bit rate. Client service 4 is a data service GE. Client service 5 is a synchronous service in STM-1. According to the bandwidth of the client service, OPU1 payload area is divided into 16 time slots in a byte-interleaved multiplexing manner. Each time slot has a bandwidth of 155.52Mbps± 20ppm. Time slots with corresponding bandwidths are allocated to each client service. For instance, STM-4 is allocated with four time slots TS5∼TS8. FE is allocated with TS10. The unknown service is allocated with TS9 and TS11. The GE is allocated with TS1∼TS4 and TS13∼TS16. STM-1 is allocated with TS12. Each client service is mapped into corresponding time slots according to the above allocation scheme. After these client services are encapsulated into OTU1, the OTU1 is transmitted to the receiver. Thus, the multiplexing of hybrid low bit rate services is realized.

In Figure 7, the mapping relation between the client service and the time slots in OPU1 payload area may be indicated by an OPU1 Payload Structure Indication (PSI). The PSI contains 256 sequences PSI[0]∼PSI[255], corresponding to the value of MPAS which is 0∼255. PSI[2]∼PSI[K+ 1] indicates a client service port number and a corresponding client service type associated with each time slot (K indicates the number of time slots). 8 bits in PSI[i] (2≤i≤K+1) are divided into two parts, indicating the client service type and the client service port number associated with each time slot. For instance, bits 1-2 are used to indicate the client service type. "00" indicates a synchronous service. "01" indicates a data service. "10" indicates an unknown service type. Bits 3-8 are used to indicate a client service port number. In this example, the port number of client service 1 is 1 and the service type is STM-4 which is allocated with TS5∼TS8. Therefore, the value of PSI[6]-PSI[9] is 0x01. The port number of client service 2 is 2 and the service type is FE service which is allocated with TS10. Therefore, the value of PSI[11] is 0x42. The port number of client service 3 is 3 and the service type is a known type service of 300Mbps which is allocated with TS9, TS11. Therefore, the value of PSI[10]∼PSI[12] is 0x83. The port number of client service 4 is 4 and the service type is GE service which is allocated with TS1-TS4, TS13∼TS16. Therefore, the value of PSI[2]∼PSI[5] and PSI[14]∼PSI[17] is 0x44. The port number of client service 5 is 5 and the service type is STM-1 service which is allocated with TS12. Therefore, the value of PSI[13] is 0x05.

### EMBODIMENT THREE

Referring to Figure 8, a method for demultiplexing low bit rate services is further provided according to an embodiment of the present invention. The method includes the following steps.

In step 301, the OTN frame transmitted from the transmitter is received and processed accordingly. The processing includes OTN frame alignment, OTUk/ODUk layer overhead processing. Information such as OTUk OH, ODUk OH, OPUk OH, payload area, FEC, FAS and MFAS is obtained accordingly.

In step 302, the mapping relation between each time slot in the OTN frame and the client service is determined based on PSI[2]∼PSI[K+1] (K is the number of time slots) in the OPUk OH and the client service type is determined.

In step 303, the type of client service is determined. If the type of client service is a synchronous service, the method proceeds to step 304. If the type of client service is a data service, the method proceeds to step 305. If type of client service is unknown, the method proceeds to step 306.

In step 304, the time slots corresponding to the client service is demapped and the synchronous service is recovered. The synchronous service goes through client service related processing including synchronous service framing, bit width conversion, electric-photo conversion, etc. The processing result is output at the client service port where the synchronous service locates. Then, step 304 ends.

In step 305, the time slots corresponding to the client service is demapped and a standard encapsulated signal, such as GFP signal flow, is recovered. Also, the data service is extracted from the standard encapsulated signal and goes through client service related processing including physical layer coding, bit width conversion, electric-photo conversion, etc. The processing result is output at the client service port where the data service locates. Then, step 305 ends.

In step 306, corresponding to the generic encapsulation described in the above embodiments, the decapsulation is performed and associated time slots are demapped. The generic encapsulated signal is thus recovered. The generic encapsulated signal is frame aligned so that the frame header mark is located. It is determined whether the generic encapsulated signal includes populated data. If the generic encapsulated signal includes populated data, populated data are removed from the generic encapsulated signal first and the unknown type service is then extracted; otherwise, the unknown type service is extracted directly. Subsequently, the extracted unknown type service is processed accordingly. The processing includes bit width conversion, electric-photo conversion, etc. Then, the processing result is output from the client service port allocated to the unknown type service. Step 306 ends.

Further, after locating the frame header mark, a verification step for performing verification using the verification bit at the end of the generic encapsulated signal may be provided. If the verification passes, the step of extracting the unknown type service is performed; otherwise, the step of extracting the unknown type service is not performed. The process ends.

### EMBODIMENT FOUR

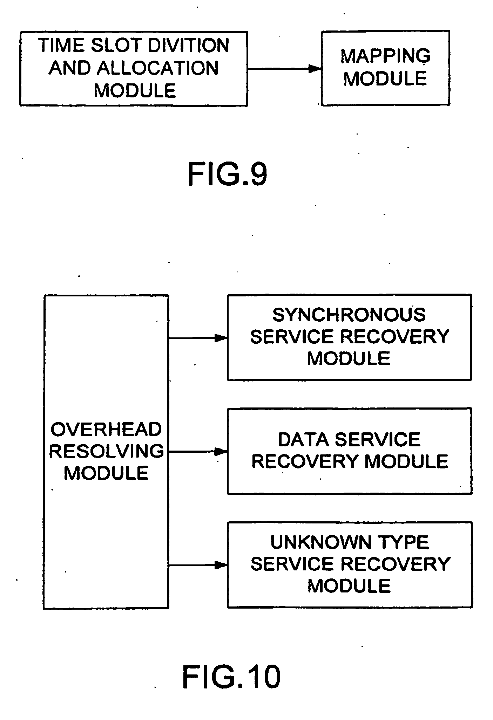

Referring to Figure 9, an apparatus for multiplexing low bit rate services is further provided according to an embodiment of the present invention. The apparatus includes the following components.
(1) a time slot division and allocation module, configured to divide an OTN frame into a plurality of time slots, and allocate the plurality of time slots to low bit rate services according to the bit rate of low bit rate services.
(2) a mapping module, configured to determine the type of low bit rate service, wherein if the low bit rate service is synchronous service, the mapping module is further configured to asynchronously map the synchronous service to the time slots allocated to the synchronous service by the time slot division and allocation module; otherwise, the mapping module is further configured to encapsulate the low bit rate service and map the low bit rate service to the time slots allocated to the low bit rate service by the time slot division and allocation module.

The mapping module may include the following units.
1) a synchronous service signal determination unit, configured to verify the low bit rate service according to a synchronous service frame alignment scheme based on the bit rate of the low bit rate service and determine that the low bit rate service is a synchronous service if the verification passes.
2) a data service signal determination unit, configured to verify the low bit rate service according to a data service coding rule based on the bit rate of the low bit rate service and determine that the low bit rate service is a data service if the verification passes.
3) an unknown type signal determination unit, configured to determine that the low bit rate service is a known type service when the low bit rate service neither passes the synchronous service frame alignment verification nor passes the data service coding rule verification.

In order to realize a transparent transmission of the low bit rate service, the above described apparatus for multiplexing low bit rate service may further include a bit rate justification module, configured to perform positive and negative justification on the bit rate of the synchronous service with OPUk justification control and justification opportunity overhead, during the process of the mapping module asynchronously mapping the synchronous service to the time slots allocated to the synchronous service by the time slot division and allocation module.

The mapping module may further include the following units.
1) a data service encapsulating unit, configured to perform a standard data service encapsulation on the low bit rate service, when the data service signal determination unit determines that the low bit rate service is data service.
2) a generic encapsulating unit, configured to write information of the unknown type service into a cache according to the clock of the unknown type service, when the unknown type service determination unit determines that the low bit rate service is an unknown service, read out data with specified length from the cache according to a predetermined clock and add frame header mark at the front of the data, and perform bit rate adaption by populating data with fixed sequence at the end of data when the clock of the unknown type service is inconsistent with the predetermined clock.

The generic encapsulating unit may further include a verification subunit, configured to add a verification bit at the end of the read-out data so as to ensure transmission integrity of the low bit rate service, when the generic encapsulating unit reads out data with specified length from the cache according to the predetermined clock.

### EMBODIMENT FIVE

Referring to Figure 10, an apparatus for demultiplexing low bit rate services is further provided according to an embodiment of the present invention. The apparatus includes the following components.
(1) an overhead resolving module, configured to determine a mapping relation between each time slot in a OTN frame and a low bit rate service based on payload structure indications in the OTN frame, and determine the type of low bit rate service.
(2) a synchronous service recovery module, configured to asynchronously demap the time slots corresponding to the low bit rate service and recover the synchronous service, when the overhead resolving module determines that the low bit rate service is a synchronous service.
(3) a data service recovery module, configured to demap the time slots corresponding to the low bit rate service, recover a standard encapsulating signal and extract data service from the standard encapsulating signal, when the overhead resolving module determines that the low bit rate service is a data service.
(4) an unknown type service recovery module, configured to demap the time slots corresponding to the low bit rate service, recover a generic encapsulating signal, decapsulate the generic encapsulating signal and obtain the known type service, when the overhead resolving module determines that the low bit rate service is an unknown type service.

The unknown type service recovery module may include the following components.
1) a demapping unit, configured to demap the time slots corresponding to the low bit rate service and recover a generic encapsulating signal, when the overhead resolving module determines that the low bit rate service is an unknown type service.
2) a decapsulating unit, configured to locate a frame header mark in the generic encapsulating signal recovered by the demapping unit and determine whether the generic encapsulating signal contains populated data, wherein if the generic encapsulating signal contains the populated data, the decapsulating unit is further configured to remove the populated data and extract the unknown type service; otherwise, the decapsulating unit is configured to extract the unknown type service directly.

The unknown type service recovery module may further include a verification unit, configured to perform verification using a verification bit at the end of the generic encapsulating signal after the decapsulating unit locates the frame header mark, and trigger the decapsulating unit to perform the step of extracting unknown type service if the verification passes.

Embodiments of the present invention may be implemented with software, such as C, C++, JAVA, Verilog or VHDL language programming. The associated software may be stored in a readable storage media, e.g., computer hardware, memory, or Field Programmable Gate Array (FPGA).

Embodiments of the present invention may realize the hybrid multiplexing and demultiplexing in terms of the OTN bearer data service and a variety of low bit rate services. The number of time slots is unlimited when the OTN frame payload area is being divided by time slots. Therefore, the present invention exhibits flexibility characteristics and maximizes the bandwidth utilization. In the process of generic encapsulation and generic decapsulation, a verification method using verification bit is employed to assure the transmission integrity of the client service. As a result of the generic encapsulation and generic decapsulation, the type and bit rate of low bit rate service are unlimited, which addresses the issue of multiplexing and demultiplexing various low bit rate services.

The foregoing embodiments are merely exemplary implementations of the present invention. Variation and equivalents made by those skilled in the art within the principle of the technical solutions of the present invention shall be construed as falling within the scope of the present invention.

## Claims

1. A method for multiplexing low bit rate services, comprising:
dividing (102) an Optical Transport Network, OTN, frame into a plurality of time slots and allocating the plurality of time slots to the low bit rate services according to a bit rate of the low bit rate services;
determining (103) the type of the low bit rate service, and asynchronously mapping (104) a synchronous service to time slots allocated to the synchronous service if it is determined that the low bit rate service is a synchronous service;
encapsulating (105,106) the low bit rate service and mapping the low bit rate service to the time slots allocated to the low bit rate service if it is determined that the low bit rate service is not a synchronous service.

2. The method of claim 1, **characterized in that** the step for dividing the OTN frame into a plurality of time slots comprises:
interleaved multiplexing or sequential multiplexing.

3. The method of claim 1, **characterized in that** determining the type of the low bit rate service comprises:
analyzing a frame header of the low bit rate service based on the bit rate of the low bit rate service, performing verification in accordance with a synchronous service frame alignment scheme wherein if the verification passes, the low bit rate service is determined to be a synchronous service;
verifying the low bit rate service in accordance with a data service coding rule based on the bit rate of the low bit rate service wherein if the verification passes, the low bit rate service is determined to be a data service;
determining the low bit rate service to be an unknown type service if the low bit rate service neither passes the synchronous service frame alignment verification nor passes the data service coding rule verification.

4. The method of claim 1 or 3, **characterized in that** encapsulating the low bit rate service comprises:
performing encapsulation in a standard data service encapsulating method if the low bit rate service is a data service;
writing information of the unknown service type into a cache according to a clock of the unknown type service if the low bit rate service is an unknown type service;
reading out data with a specified length from the cache according to a predetermined clock; adding a frame header mark at the front of the data; performing a bit rate adaption by populating data with fixed sequence at the end of the data when the clock of the unknown type service is inconsistent with the predetermined clock.

5. The method of claim 4, further comprising:
adding, when the low bit rate service is an unknown type service, a verification bit at the end of the data so as to ensure transmission integrity of the low bit rate service, after the data with specified length is read out from the cache according to the predetermined clock.

6. An apparatus for multiplexing low bit rate services, comprising:
a time slot division and allocation module, configured to divide an Optical Transport Frame, OTN, frame into a plurality of time slots and allocate the plurality of time slots to the low bit rate services according to the bit rate of low bit rate services;
a mapping module, configured to determine the type of the low bit rate service, wherein if the low bit rate service is a synchronous service, the mapping module is further configured to asynchronously map the synchronous service to the time slots allocated to the synchronous service by the time slot division and allocation module; otherwise, the mapping module is further configured to encapsulate the low bit rate service and map the low bit rate service into the time slots allocated to the low bit rate service by the time slot division and allocation module.

7. The apparatus of claim 6, **characterized in that**, the mapping module comprises
a synchronous service signal determination unit, configured to verify the low bit rate service according to a synchronous service frame alignment scheme based on the bit rate of the low bit rate service, and determine that the low bit rate service is a synchronous service if the verification passes;
a data service signal determination unit, configured to verify the low bit rate service according to a data service coding rule based on the bit rate of the low bit rate service, and determine that the low bit rate service is a data service if the verification passes;
an unknown type service signal determination unit, configured to determine that the low bit rate service is a known type service, when the low bit rate service neither passes the synchronous service frame alignment verification nor passes the data service coding rule verification.

8. The apparatus of claim 7, **characterized in that** the mapping module comprises:
a data service encapsulating unit, configured to perform a standard data service encapsulation on the low bit rate service, when the data service signal determination unit determines that the low bit rate service is a data service;
a generic encapsulating unit, configured to write information of the unknown type service into a cache according to a clock of the unknown type service signal when the unknown type service signal determination unit determines that the low bit rate service is an unknown type service, read out data with specified length from the cache according to a predetermined clock and add a frame header mark at the front of the data, and perform a bit rate adaption by populating data with fixed sequence at the end of data when the clock of the unknown type service is inconsistent with the predetermined clock.

9. The apparatus of claim 8, **characterized in that** the generic encapsulating unit further comprises:
a verification subunit, configured to add a verification bit at the end of the data so as to ensure transmission integrity of the low bit rate service, after the data with specified length is read out from the cache according to the predetermined clock.

10. A method for demultiplexing low bit rate services, comprising:
determining (302) a mapping relation between each time slot in an Optical Transport Network, OTN, trame and a low bit rate service based on payload structure indications in the OTN frame and determine the type of the low bit rate service;
asynchronously demapping (304) the time slots corresponding to the low bit rate service and recovering the synchronous service if the low bit rate service is a synchronous service;
demapping (305), if the low bit rate service is a data service, the time slots corresponding to the low bit rate service, recovering a standard encapsulating signal, extracting the data service from the standard encapsulating signal;
demapping (306), if the low bit rate service is an unknown service, the time slots corresponding to the low bit rate service, recovering a generic encapsulating signal, performing decapsulation and obtaining the unknown type service.

11. The method of claim 10, **characterized in that** the decapsulation comprises:
locating a frame header mark in the generic encapsulating signal;
determining whether the generic encapsulating signal contains populated data; removing the populated data first and then extracting the unknown type service if the generic encapsulating signal contains the populated data; extracting the unknown type service directly if the generic encapsulating signal does not contain the populated data.

12. The method of claim 11, **characterized in that**, after locating the frame header mark in the generic encapsulating signal, the method further comprises:
performing verification using a verification bit at the end of the generic encapsulating signal; performing the step of extracting the unknown type service if the verification passes.

13. An apparatus for demultiplexing low bit rate services, comprising:
an overhead resolving module, configured to determine a mapping relation between each time slot in a OTN frame and a low bit rate service based on payload structure indications in the OTN frame, and determine the type of the low bit rate service;
a synchronous service recovery module, configured to asynchronously demap the time slots corresponding to the low bit rate service and recover the synchronous service, when the overhead resolving module determines that the low bit rate service is a synchronous service;
a data service recovery module, configured to demap the time slots corresponding to the low bit rate service, recover a standard encapsulating signal and extract data service from the standard encapsulating signal, when the overhead resolving module determines that the low bit rate service is a data service; and
an unknown type service recovery module, configured to demap the time slots corresponding to the low bit rate service, recover a generic encapsulating signal, decapsulate the generic encapsulating signal and obtain the unknown type service, when the overhead resolving module determines that the low bit rate service is an unknown type service.

14. The apparatus of claim 13, **characterized in that** the unknown type service recovery module comprises;
a demapping unit, configured to demap the time slots corresponding to the low bit rate service and recover a generic encapsulating signal, when the overhead resolving module determines that the low bit rate service is an unknown type service;
a decapsulating unit, configured to locate the frame header mark in the generic encapsulating signal recovered by the demapping unit and determine whether the generic encapsulating signal contains populated data, wherein if the generic encapsulating signal contains the populated data, the decapsulating unit is further configured to first remove the populated data and then extract the unknown type service; otherwise, the decapsulating unit is further configured to extracts the unknown type service directly.

15. The apparatus of claim 14, **characterized in that** the unknown type service recovery module comprises a verification unit configured to perform verification using a verification bit at the end of the generic encapsulating signal after the decapsulating unit locates the frame header mark, and trigger the decapsulating unit to perform the step of extracting unknown type service if the verification passes.

## Patentansprüche

1. Verfahren zum Multiplexen von Niederbitratendiensten, mit den folgenden Schritten:
Aufteilen (102) eines Rahmens des Optical Transport Network OTN in mehrere Zeitschlitze und Vergeben der mehreren Zeitschlitze an die Niederbitratendienste gemäß einer Bitrate der Niederbitratendienste;
Bestimmen (103) des Typs des Niederbitratendienstes und asynchrones Abbilden (104) eines Synchrondienstes auf an den Synchrondienst vergebene Zeitschlitze, wenn bestimmt wird, dass der Niederbitratendienst ein Synchrondienst ist;
Einkapseln (105; 106) des Niederbitratendienstes und Abbilden des Niederbitratendienstes auf die an den Niederbitratendienst vergebenen Zeitschlitze, wenn bestimmt wird, dass der Niederbitratendienst kein Synchrondienst ist.

2. Verfahren nach Anspruch 1, **dadurch gekennzeichnet, dass** der Schritt des Aufteilens des OTN-Rahmens in mehrere Zeitschlitze Folgendes umfasst:
verschachteltes Multiplexen oder sequentielles Multiplexen.

3. Verfahren nach Anspruch 1, **dadurch gekennzeichnet, dass** das Bestimmen des Typs des Niederbitratendienstes Folgendes umfasst:
Analysieren eines Rahmenkopfteils des Niederbitratendienstes auf der Basis der Bitrate des Niederbitratendienstes, Ausführen von Verifikation gemäß einem Synchrondienst-Rahmenausrichtungsschema, wobei, wenn die Verifikation bestanden wird, bestimmt wird, dass der Niederbitratendienst ein Synchrondienst ist;
Verifizieren des Niederbitratendienstes gemäß einer Datendienst-Codierungsregel auf der Basis der Bitrate des Niederbitratendienstes, wobei, wenn die Verifikation bestanden wird, bestimmt wird, dass der Niederbitratendienst ein Datendienst ist;
Bestimmen, dass der Niederbitratendienst ein Dienst unbekannten Typs ist, wenn der Niederbitratendienst weder die Synchrondienst-Rahmenausrichtungsverifikation besteht noch die Datendienst-Codierungsregelverifikation besteht.

4. Verfahren nach Anspruch 1 oder 3, **dadurch gekennzeichnet, dass** das Einkapseln des Niederbitratendienstes Folgendes umfasst:
Ausführen von Einkapselung in einem Standard-Datendienst-Einkapselungsverfahren, wenn der Niederbitratendienst ein Datendienst ist;
Schreiben von Informationen des Dienstes unbekannten Typs in einen Cache gemäß einem Takt des Dienstes unbekannten Typs, wenn der Niederbitratendienst ein Dienst unbekannten Typs ist;
Auslesen von Daten mit einer spezifizierten Länge aus dem Cache gemäß einem vorbestimmten Takt; Hinzufügen einer Rahmenkopfteilmarkierung an der Vorderseite der Daten; Ausführen einer Bitratenanpassung durch Auffüllen von Daten mit fester Sequenz am Ende der Daten, wenn der Takt des Dienstes unbekannten Typs mit dem vorbestimmten Takt nicht vereinbar ist.

5. Verfahren nach Anspruch 4, ferner mit dem folgenden Schritt:
wenn der Niederbitratendienst ein Dienst unbekannten Typs ist, Hinzufügen eines Verifikationsbit am Ende der Daten, um so Übertragungsintegrität des Niederbitratendienstes sicherzustellen, nachdem die Daten mit spezifizierter Länge gemäß dem vorbestimmten Takt aus dem Cache ausgelesen werden.

6. Vorrichtung zum Multiplexen von Niederbitratendiensten, umfassend:
ein Zeitschlitzaufteilungs- und -vergabemodul, das dafür ausgelegt ist, einen Rahmen des Optical Transport Network OTN in mehrere Zeitschlitze aufzuteilen und die mehreren Zeitschlitze gemäß der Bitrate von Niederbitratendiensten an die Niederbitratendienste zu vergeben;
ein Abbildungsmodul, das dafür ausgelegt ist, den Typ des Niederbitratendienstes zu bestimmen, wobei, wenn der Niederbitratendienst ein Synchrondienst ist, das Abbildungsmodul ferner dafür ausgelegt ist, den Synchrondienst asynchron auf die durch das Zeitschlitzaufteilungs- und vergabemodul an den Synchrondienst vergebenen Zeitschlitze abzubilden; und andernfalls das Abbildungsmodul ferner dafür ausgelegt ist, den Niederbitratendienst einzukapseln und den Niederbitratendienst in die durch das Zeitschlitzaufteilungs- und -vergabemodul an den Niederbitratendienst vergebenen Zeitschlitze abzubilden.

7. Vorrichtung nach Anspruch 6, **dadurch gekennzeichnet, dass** das Abbildungsmodul Folgendes umfasst:
eine Synchrondienst-Signalbestimmungseinheit, die dafür ausgelegt ist, den Niederbitratendienst gemäß einem Synchrondienst-Rahmenausrichtungsschema auf der Basis der Bitrate des Niederbitratendienstes zu verifizieren und zu bestimmen,
dass der Niederbitratendienst ein Synchrondienst ist, wenn die Verifikation bestanden wird;
eine Datendienst-Signalbestimmungseinheit, die dafür ausgelegt ist, den Niederbitratendienst gemäß einer Datendienst-Codierungsregel auf der Basis der Bitrate des Niederbitratendienstes zu verifizieren und zu bestimmen, dass der Niederbitratendienst ein Datendienst ist, wenn die Verifikation bestanden wird;
eine Dienstsignalbestimmungseinheit unbekannten Typs, die dafür ausgelegt ist, zu bestimmen, dass der Niederbitratendienst ein Dienst bekannten Typs ist, wenn der Niederbitratendienst weder die Synchrondienst-Rahmenausrichtungsverifikation besteht noch die Datendienst-Codierungsregelverifikation besteht.

8. Vorrichtung nach Anspruch 7, **dadurch gekennzeichnet, dass** das Abbildungsmodul Folgendes umfasst:
eine Datendienst-Einkapselungseinheit, die dafür ausgelegt ist, eine Standard-Datendienst-Einkapselung an dem Niederbitratendienst auszuführen, wenn die Datendienst-Signalbestimmungseinheit bestimmt, dass der Niederbitratendienst ein Datendienst ist;
eine generische Einkapselungseinheit, die dafür ausgelegt ist, Informationen des Dienstes unbekannten Typs gemäß einem Takt des Dienstes unbekannten Typs in einen Cache zu schreiben, wenn die Dienstsignalbestimmungseinheit unbekannten Typs bestimmt, dass der Niederbitratendienst ein Dienst unbekannten Typs ist, Daten mit spezifizierter Länge gemäß einem vorbestimmten Takt aus dem Cache auszulesen und eine Rahmenkopfteilmarkierung an der Vorderseite der Daten hinzuzufügen und eine Bitratenanpassung durch Auffüllen von Daten mit fester Sequenz am Ende der Daten auszuführen, wenn der Takt des Dienstes unbekannten Typs mit dem vorbestimmten Takt nicht vereinbar ist.

9. Vorrichtung nach Anspruch 8, **dadurch gekennzeichnet, dass** die generische Einkapselungseinheit ferner Folgendes umfasst:
eine Verifikations-Teileinheit, die dafür ausgelegt ist, ein Verifikationsbit am Ende der Daten hinzuzufügen, um so Übertragungsintegrität des Niederbitratendienstes sicherzustellen, nachdem die Daten mit spezifizierter Länge gemäß dem vorbestimmten Takt aus dem Cache ausgelesen sind.

10. Verfahren zum Demultiplexen von Niederbitratendiensten, mit den folgenden Schritten:
Bestimmen (302) einer Abbildungsbeziehung zwischen jedem Zeitschlitz in einem Rahmen des Optical Transport Network OTN und einem Niederbitratendienst auf der Basis von Nutzinformations-Strukturangaben in dem OTN-Rahmen und Bestimmen des Typs des Niederbitratendienstes;
asynchrones Entabbilden (304) der dem Niederbitratendienst entsprechenden Zeitschlitze und Wiederherstellen des Synchrondienstes, wenn der Niederbitratendienst ein Synchrondienst ist;
Entabbilden (305) der dem Niederbitratendienst entsprechenden Zeitschlitze, wenn der Niederbitratendienst ein Datendienst ist, Wiederherstellen eines Standard-Einkapselungssignals, Extrahieren des Datendienstes aus dem Standard-Einkapselungssignal;
Entabbilden (306) der dem Niederbitratendienst entsprechenden Zeitschlitze, wenn der Niederbitratendienst ein Dienst unbekannten Typs ist, Wiederherstellen eines generischen Einkapselungssignals, Ausführen von Entkapselung und Erhalten des Dienstes unbekannten Typs.

11. Verfahren nach Anspruch 10, **dadurch gekennzeichnet, dass** die Entkapselung Folgendes umfasst:
Finden einer Rahmenkopfteilmarkierung in dem generischen Einkapselungssignal;
Bestimmen, ob das generische Einkapselungssignal aufgefüllte Daten enthält; zuerst Entfernen der aufgefüllten Daten und dann Extrahieren des Dienstes unbekannten Typs, wenn das generische Einkapselungssignal die aufgefüllten Daten enthält und direktes Extrahieren des Dienstes unbekannten Typs, wenn das generische Einkapselungssignal die aufgefüllten Daten nicht enthält.

12. Verfahren nach Anspruch 11, **dadurch gekennzeichnet, dass** das Verfahren nach dem Finden der Rahmenkopfteilmarkierung in dem generischen Einkapselungssignal ferner Folgendes umfasst:
Ausführen einer Verifikation unter Verwendung eines Verifikationsbit am Ende des generischen Einkapselungssignals; und Ausführen des Schritts des Extrahierens des Dienstes unbekannten Typs, wenn die Verifikation bestanden wird.

13. Vorrichtung zum Demultiplexen von Niederbitratendiensten, umfassend:
ein Overhead-Auflösungsmodul, das dafür ausgelegt ist, eine Abbildungsbeziehung zwischen jedem Zeitschlitz in einem OTN-Rahmen und einem Niederbitratendienst auf der Basis von Nutzinformations-Strukturangaben in dem OTN-Rahmen zu bestimmen und den Typ des Niederbitratendienstes zu bestimmen;
ein Synchrondienst-Wiederherstellungsmodul, das dafür ausgelegt ist, die dem Niederbitratendienst entsprechenden Zeitschlitze asynchron zu entabbilden und den Synchrondienst wiederherzustellen, wenn das Overhead-Auflösungsmodul bestimmt, dass der Niederbitratendienst ein Synchrondienst ist;
ein Datendienst-Wiederherstellungsmodul, das dafür ausgelegt ist, die dem Niederbitratendienst entsprechenden Zeitschlitze zu entabbilden, ein Standard-Einkapselungssignal wiederherzustellen und Datendienst aus dem Standard-Einkapselungssignal zu extrahieren, wenn das Overhead-Auflösungsmodul bestimmt, dass der Niederbitratendienst ein Datendienst ist; und
ein Dienstwiederherstellungsmodul unbekannten Typs, das dafür ausgelegt ist, die dem Niederbitratendienst entsprechenden Zeitschlitze zu entabbilden, ein generisches Einkapselungssignal wiederherzustellen, das generische Einkapselungssignal zu entkapseln und den Dienst unbekannten Typs zu erhalten, wenn das Overhead-Auflösungsmodul bestimmt, dass der Niederbitratendienst ein Dienst unbekannten Typs ist.

14. Vorrichtung nach Anspruch 13, **dadurch gekennzeichnet, dass** das Dienstwiederherstellungsmodul unbekannten Typs Folgendes umfasst:
eine Entabbildungseinheit, die dafür ausgelegt ist, die dem Niederbitratendienst entsprechenden Zeitschlitze zu entabbilden und ein generisches Einkapselungssignal wiederherzustellen, wenn das Overhead-Auflösungsmodul bestimmt, dass der Niederbitratendienst ein Dienst unbekannten Typs ist;
eine Entkapselungseinheit, die dafür ausgelegt ist, eine Rahmenkopfteilmarkierung in dem durch die Entabbildungseinheit wiederhergestellten generischen Einkapselungssignal zu finden und zu bestimmen, ob das generische Einkapselungssignal aufgefüllte Daten enthält, wobei, wenn das generische Einkapselungssignal die aufgefüllten Daten enthält, die Entkapselungseinheit ferner dafür ausgelegt ist, zuerst die aufgefüllten Daten zu entfernen und dann den Dienst unbekannten Typs zu extrahieren; und andernfalls die Entkapselungseinheit ferner dafür ausgelegt ist, den Dienst unbekannten Typs direkt zu extrahieren.

15. Vorrichtung nach Anspruch 14, **dadurch gekennzeichnet, dass** das Dienstwiederherstellungsmodul unbekannten Typs eine Verifikationseinheit umfasst, die dafür ausgelegt ist, unter Verwendung eines Verifikationsbit am Ende des generischen Einkapselungssignals eine Verifikation auszuführen, nachdem die Entkapselungseinheit die Rahmenkopfteilmarkierung findet, und die Entkapselungseinheit zu trigger, den Schritt des Extrahierens des Dienstes unbekannten Typs auszuführen, wenn die Verifikation bestanden wird.

## Revendications

1. Procédé de multiplexage de services à faible débit binaire, comprenant les étapes consistant à :
diviser (102) une trame de réseau de transport optique, dit OTN, en une pluralité de créneaux temporels et allouer la pluralité de créneaux temporels aux services à faible débit binaire en fonction d'un débit binaire des services à faible débit binaire ;
établir (103) le type du service à faible débit binaire et effectuer un mappage asynchrone (104) d'un service synchrone sur des créneaux temporels alloués au service synchrone s'il est établi que le service à faible débit binaire est un service synchrone ;
encapsuler (105, 106) le service à faible débit binaire et mapper le service à faible débit binaire sur les créneaux temporels alloués au service à faible débit binaire s'il est établi que le service à faible débit binaire n'est pas un service synchrone.

2. Procédé selon la revendication 1, **caractérisé en ce que** l'étape consistant à diviser la trame OTN en une pluralité de créneaux temporels comprend l'étape consistant à effectuer un multiplexage entrelacé ou un multiplexage séquentiel.

3. Procédé selon la revendication 1, **caractérisé en ce que** l'étape consistant à établir le type du service à faible débit binaire comprend les étapes consistant à :
analyser un en-tête de trame du service à faible débit binaire compte tenu du débit binaire du service à faible débit binaire, effectuer une vérification par rapport à un schéma de verrouillage de trame de service synchrone de sorte que, en cas de succès de la vérification, il est établi que le service à faible débit binaire est un service synchrone ;
vérifier le service à faible débit binaire par rapport à une règle de codage de service de données compte tenu du débit binaire du service à faible débit binaire de sorte que,
en cas de succès de la vérification, il est établi que le service à faible débit binaire est un service de données ;
établir que le service à faible débit binaire est un service de type inconnu en cas de non-vérification du verrouillage de trame de service synchrone et de non-vérification de la règle de codage de service de données par le service à faible débit binaire.

4. Procédé selon la revendication 1 ou 3, **caractérisé en ce que** l'étape consistant à encapsuler le service à faible débit binaire comprend les étapes consistant à :
effectuer une encapsulation selon un procédé d'encapsulation de service de données standard si le service à faible débit binaire est un service de données ;
écrire des informations relatives au service de type inconnu dans une mémoire cache en fonction d'une horloge du service de type inconnu si le service à faible débit binaire est un service de type inconnu ;
sortir de la mémoire cache des données d'une longueur spécifiée en fonction d'une horloge prédéfinie ; ajouter un indicateur d'en-tête de trame en tête des données ;
effectuer une adaptation de débit binaire en chargeant des données à séquence fixe en queue des données si l'horloge du service de type inconnu est incompatible avec l'horloge prédéfinie.

5. Procédé selon la revendication 4, comprenant en outre l'étape consistant à :
ajouter, si le service à faible débit binaire est un service de type inconnu, un bit de vérification en queue des données de manière à garantir l'intégrité de transmission du service à faible débit binaire, suite à l'étape consistant à sortir de la mémoire cache les données d'une longueur spécifiée en fonction de l'horloge prédéfinie.

6. Appareil de multiplexage de services à faible débit binaire, comprenant :
un module de division en créneaux temporels et d'allocation de créneaux temporels, conçu pour diviser une trame de réseau de transport optique, dit OTN, en une pluralité de créneaux temporels et allouer la pluralité de créneaux temporels aux services à faible débit binaire en fonction du débit binaire des services à faible débit binaire ;
un module de mappage, conçu pour établir le type du service à faible débit binaire ; si le service à faible débit binaire est un service synchrone, le module de mappage étant en outre conçu pour effectuer un mappage asynchrone du service synchrone sur les créneaux temporels alloués au service synchrone par le module de division en créneaux temporels et d'allocation de créneaux temporels, et, dans le cas contraire, le module de mappage étant en outre conçu pour encapsuler le service à faible débit binaire et mapper le service à faible débit binaire sur les créneaux temporels alloués au service à faible débit binaire par le module de division en créneaux temporels et d'allocation de créneaux temporels.

7. Appareil selon la revendication 6, **caractérisé en ce que** le module de mappage comprend :
une unité d'établissement de signal de service synchrone, conçue pour vérifier le service à faible débit binaire par rapport à un schéma de verrouillage de trame de service synchrone compte tenu du débit binaire du service à faible débit binaire, et établir que le service à faible débit binaire est un service synchrone en cas de succès de la vérification ;
une unité d'établissement de signal de service de données, conçue pour vérifier le service à faible débit binaire par rapport à une règle de codage de service de données compte tenu du débit binaire du service à faible débit binaire, et établir que le service à faible débit binaire est un service de données en cas de succès de la vérification ;
une unité d'établissement de signal de service de type inconnu, conçue pour établir que le service à faible débit binaire est un service de type inconnu en cas de non-vérification du verrouillage de trame de service synchrone et de non-vérification de la règle de codage de service de données par le service à faible débit binaire.

8. Appareil selon la revendication 7, **caractérisé en ce que** le module de mappage comprend :
une unité d'encapsulation de service de données, conçue pour effectuer une encapsulation de service de données standard sur le service à faible débit binaire si l'unité d'établissement de signal de service de données établit que le service à faible débit binaire est un service de données ;
une unité d'encapsulation générique, conçue pour écrire des informations relatives au service de type inconnu dans une mémoire cache en fonction d'une horloge du service de type inconnu si l'unité d'établissement de signal de service de type inconnu établit que le service à faible débit binaire est un service de type inconnu,
sortir de la mémoire cache des données d'une longueur spécifiée en fonction d'une horloge prédéfinie et ajouter un indicateur d'en-tête de trame en tête des données, et effectuer une adaptation de débit binaire en chargeant des données à séquence fixe en queue des données si l'horloge du service de type inconnu est incompatible avec l'horloge prédéfinie.

9. Appareil selon la revendication 8, **caractérisé en ce que** l'unité d'encapsulation générique comprend en outre :
une sous-unité de vérification, conçue pour ajouter un bit de vérification en queue des données de manière à garantir l'intégrité de transmission du service à faible débit binaire, suite à la sortie de la mémoire cache des données d'une longueur spécifiée en fonction de l'horloge prédéfinie.

10. Procédé de démultiplexage de services à faible débit binaire, comprenant les étapes consistant à :
établir (302) une relation de mappage entre chaque créneau temporel dans une trame de réseau de transport optique, dit OTN, et un service à faible débit binaire compte tenu d'indications de structure de charge utile dans la trame OTN, et établir le type du service à faible débit binaire ;
effectuer un démappage asynchrone (304) des créneaux temporels correspondant au service à faible débit binaire et récupérer le service synchrone si le service à faible débit binaire est un service synchrone ;
démapper (305), si le service à faible débit binaire est un service de données, les créneaux temporels correspondant au service à faible débit binaire, récupérer un signal d'encapsulation standard, extraire le service de données du signal d'encapsulation standard ;
démapper (306), si le service à faible débit binaire est un service de type inconnu, les créneaux temporels correspondant au service à faible débit binaire, récupérer un signal d'encapsulation générique, effectuer une décapsulation et obtenir le service de type inconnu.

11. Procédé selon la revendication 10, **caractérisé en ce que** l'étape consistant à effectuer la décapsulation comprend les étapes consistant à :
localiser un indicateur d'en-tête de trame dans le signal d'encapsulation générique ;
établir si le signal d'encapsulation générique contient des données chargées ; d'abord supprimer les données chargées puis extraire le service de type inconnu si le signal d'encapsulation générique contient les données chargées ; extraire directement le service de type inconnu si le signal d'encapsulation générique ne contient pas les données chargées.

12. Procédé selon la revendication 11, **caractérisé en ce qu'**il comprend en outre, suite à l'étape consistant à localiser l'indicateur d'en-tête de trame dans le signal d'encapsulation générique, les étapes consistant à :
effectuer une vérification au moyen d'un bit de vérification en queue du signal d'encapsulation générique ; mettre en oeuvre l'étape consistant à extraire le service de type inconnu en cas de succès de la vérification.

13. Appareil de démultiplexage de services à faible débit binaire, comprenant :
un module de résolution de surdébit, conçu pour établir une relation de mappage entre chaque créneau temporel dans une trame OTN et un service à faible débit binaire compte tenu d'indications de structure de charge utile dans la trame OTN, et établir le type du service à faible débit binaire ;
un module de récupération de service synchrone, conçu pour effectuer un démappage asynchrone des créneaux temporels correspondant au service à faible débit binaire et récupérer le service synchrone si le module de résolution de surdébit établit que le service à faible débit binaire est un service synchrone ;
un module de récupération de service de données, conçu pour démapper les créneaux temporels correspondant au service à faible débit binaire, récupérer un signal d'encapsulation standard, et extraire le service de données du signal d'encapsulation standard si le module de résolution de surdébit établit que le service à faible débit binaire est un service de données ; et
un module de récupération de service de type inconnu, conçu pour démapper les créneaux temporels correspondant au service à faible débit binaire, récupérer un signal d'encapsulation générique, décapsuler le signal d'encapsulation générique, et obtenir le service de type inconnu si le module de résolution de surdébit établit que le service à faible débit binaire est un service de type inconnu.

14. Appareil selon la revendication 13, **caractérisé en ce que** le module de récupération de service de type inconnu comprend :
une unité de démappage, conçue pour démapper les créneaux temporels correspondant au service à faible débit binaire et récupérer un signal d'encapsulation générique si le module de résolution de surdébit établit que le service à faible débit binaire est un service de type inconnu,
une unité de décapsulation, conçue pour localiser un indicateur d'en-tête de trame dans le signal d'encapsulation générique récupéré par l'unité de démappage et établir si le signal d'encapsulation générique contient des données chargées ; si le signal d'encapsulation générique contient les données chargées, l'unité de décapsulation étant en outre conçue pour d'abord supprimer les données chargées puis extraire le service de type inconnu ; dans le cas contraire, l'unité de décapsulation étant en outre conçue pour extraire directement le service de type inconnu.

15. Appareil selon la revendication 14, **caractérisé en ce que** le module de récupération de service de type inconnu comprend une unité de vérification, conçue pour effectuer une vérification au moyen d'un bit de vérification en queue du signal d'encapsulation générique une fois que l'unité de décapsulation a localisé l'indicateur d'en-tête de trame, et amener l'unité de décapsulation à mettre en oeuvre l'étape consistant à extraire le service de type inconnu en cas de succès de la vérification.
